# EUROPEAN PATENT APPLICATION

(11) **EP 0 724 370 A1**
(43) Date of publication of application: **31.07.1996**
(21) Application number: 96300387.6
(22) Date of filing: 19.01.1996
(51) Int. Cl.: H04Q 3/545

(54) **Service interactions prevention in telecommunication systems**

(30) Priority: 28.01.1995 GB 9501716
(71) Applicant: GPT LIMITED, Coventry, CV3 1HJ (GB)
(72) Inventor: Marples, David J., Draycott, Derby DE72 3QS (GB)
(74) Representative: Branfield, Henry Anthony

(57) **Abstract**

In telecommunications system there is an increasing risk of adverse interactions between features embedded in the system and external features. Such interactions can be prevented by a telecommunication system comprising first and second software sub-systems, a hardware sub-system and an interaction manager, the first software sub-system running a copy of the system software, the "live" copy, and providing the commands to the hardware sub-system, the second software system running a duplicate copy of the system software and providing commands to the interaction manager, both software sub-systems receiving events from the interaction manager, the software being able to provide a plurality of features for use by subscribers to the system, wherein arbitration between an external feature and the software features is provided by the interaction manager, the duplicate software providing commands to the interaction manager in response to events generated by the external feature.

## Description

Within a large number of telecommunications companies a very large investment has been made over the last ten or fifteen years adding considerable service functionality to their switching systems. These systems and the services which they contain will be required to interwork with the services that will be provided within networks by the emergent technologies Intelligent Networks (IN) and Computer Supported Telecommunication Applications (CSTA) over the next few years. There are a number of practical reasons why this will prove difficult.

Much of the original software was written a number of years ago, without the benefit of modem software engineering and documentation techniques. With this limited information it will be difficult to ensure correct interworking with new services as they become available without simply testing all available combinations. As more and more services become available, the number of tests which need to be performed grows exponentially and the testing burden will quickly become untenable.

To this must be added the problems of maintenance of an increasingly aged software base and it becomes obvious why the situation needs to be addressed in very short order.

There are emergent technologies, in both public and private systems which are providing the drive for the combination of public and private networks. In doing so, they will also provide one of the main limitations to the extent of that integration. They are discussed herein in very basic terms in order to form a basis for the proposal that will follow.

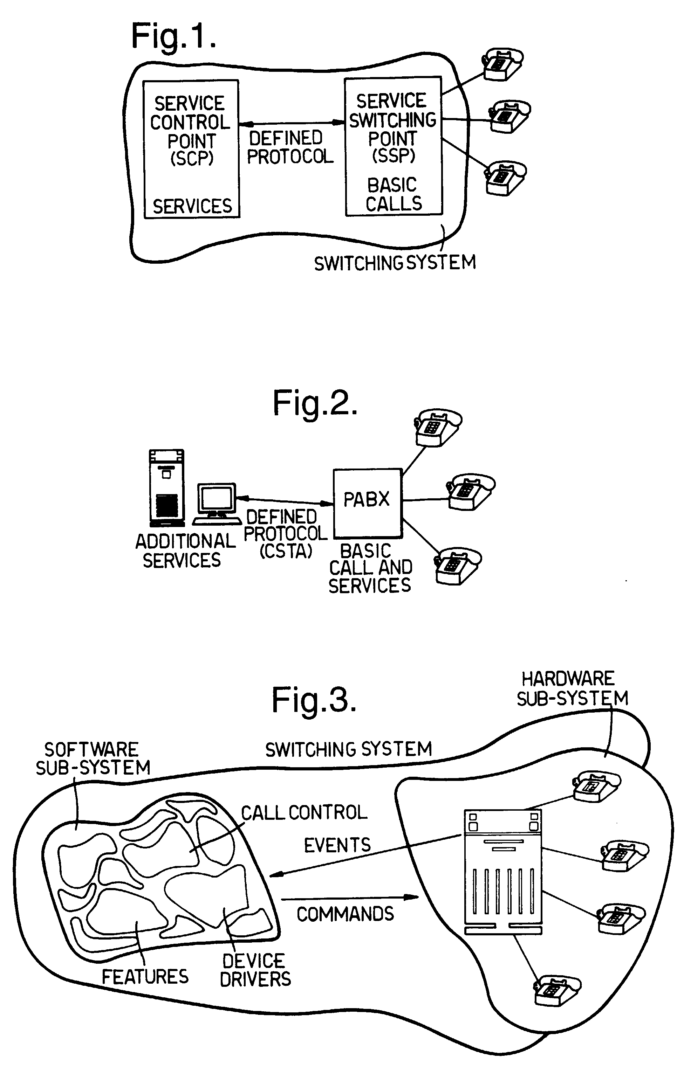

The Intelligent Network (IN) is a term for a public network architecture which has been adopted internationally to take us into the next century¹. By changing the relationship of the Basic Call (i.e. a person to person telephone call) to the added value services (e.g. Call Waiting, Three Party Calling etc.) it has been possible to separate off the features and provide them separately within the network, and to provide a defined interface between the basic call and the added value services. Within the IN architecture, the services are provided in a separate physical entity within the network known as a Service Control Point, or SCP, which influences the progress of a call which is contained within the Service Switching Point, or SSP. This is shown in Figure 1.

By providing this separation new services can be written and implemented in the network much more quickly than has previously been the case. This is due to a number of key benefits that the IN architecture provides, most notably;
- The logical separation of the basic call from the services means that only calls that are affected by the service will ever see it. This means that other call scenarios, which do not use the new service, do not need to be re-tested as the new one is introduced. Obviously this speeds up the time to market as the system testing requirement is reduced.
- The defined interface between the Basic Call and the Services means that there is much less programming required to implement a new service than would otherwise be the case. Further, it is possible to provide standard tools for service authoring. Again, this speeds up the time to market.

Computer Supported Telecommunication Applications (CSTA) is a set of protocols for use within the private environment which provides for much of the same functionality as IN does in the public network² see Figure 2. Again it allows the progress of calls to be changed from that which would normally occur, using a defined interface between the Service Control Element and the Call Control Element.

However, the use of CSTA tends to be different to that of IN. Whereas IN provides additional call processing functionality (i.e. new Services such as Camp-On, Three Party Call etc.) CSTA is used to provide value added services such as Teledialling and Automatic Call Distribution, since private systems have had enhanced call processing functionality for a number of years now within the basic switching product.

CSTA is more often thought of as being an arrangement whereby an external computing element works in conjunction with a PABX system to provide augmented call processing functionality which neither of them could provide independently of the other.

The central problem is most easily illustrated by means of examples. Consider the case of an extension user A who has Call Diversion on Busy set on their telephone. This means that when they are busy on a call, new calls which arrive will be diverted automatically by the PABX to another answering point, B.

An incoming call arrives and is diverted because the user is busy. The call rings at B but is not answered and so the calling party sets a Ring Back request. The question is: What type of Ring Back should be set? From the point of view of the public network (which is seeing ringing) it should be a Ring Back When Next Call Used on B, but in reality, since the call was diverted from its original answering point by the Call Diversion on Busy facility within the private network, it should be a Ring Back when Free on A. The correct decision as to what feature to invoke can only be made by the public network if it knows what other services influenced the path of the call.

Interactions are often more subtle than this. Consider the case of a call originated within the public network being presented to a PABX which provides enhanced functionality via CSTA. For the purposes of this discussion, it is assumed that the enhanced functionality being provided is a Call Centre (CC) Application which is described in the Glossary.

The incoming call arrives at the terminating PABX and is routed by the CSTA-CC package to a terminal. Let us assume that the agent at that terminal is not able to take that call for one of a variety of reasons, and after a few rings the calling party wishes to place a Ring Back When Next Used request on the terminal, using functionality provided by the IN.

It would be more appropriate that the Ring Back be placed on the CC queue, rather than the specific agent that was called on this particular occasion, since the call could equally well be sent to any member of the CC group. This implies that the CSTA-CC package needs to be explicitly aware of the IN Ring Back When Next Used service, so that it knows how to deal with the request. Otherwise, the normal default Ring Back When Next Used action would be followed, which would result in the call being placed on the specific agent.

The above scenarios are reasonably straightforward to accommodate, provided that full specifications are available for all of the services that could occur along the call path. These service specifications could be published, the interactions between them identified and their resolution standardised. This is reasonably similar to what already happens within the existing standards bodies, and would indeed solve the problem in the short term.

Consider however what will happen as IN and CSTA are both being to be used for what they are ostensibly designed for - the development of bespoke systems for just one, or a small number of, users. If there are just one thousand services within the network it only needs one service provider to change the definition of one service and nine hundred and ninety nine other service scripts have to be checked and potentially changed, since, in the initial analysis, any service could interact with any other service.

This is not a hypothetical situation. Over the last few years several computer systems manufacturers have announced initiatives based on CSTA functionality. Most large PABXs either support CSTA or will do so with the next two years. Within the public network in the UK the Department of Trade and Industry (DTI) have requested comment on the possibility of opening up IN to independent third party service providers. This could reasonably be expected to happen within the next five years.

In this scenario, with multiple services being provided by multiple vendors, in a mixed heterogeneous network environment, the first time that two services will ever meet each other is when the call is placed. This is the time at which the interactions between them will need to be resolved.

The implication of the discussion above is that the resolution of interactions between services must, in the long term, be resolved at runtime i.e. while the switching systems are in active service. The final goal has to be **to support the transparent, automatic interworking of services across multiple networks.** However, most PABXs already have a very large number of services built into the switching system, since functionality has always been their main selling point. It would not be economic to re-write all of these services to accommodate these new interaction resolution techniques, and so the question has to be how can these socalled legacy systems be accommodated?

Addressing this question is the first step towards the development of a full Interaction Resolution Technique, with the ability to evolve to meet the requirements of public/private network integration.

According to the present invention there is provided a software controlled system comprising an event generator, a plurality of software sub-systems, each sub-system containing the same plurality of features, an interaction manager and an external feature module, wherein all events are routed from the event generator to a sub-system via the interaction manager, only a one of the plurality of sub-systems being able to provide a response directly to the event generator, a response from any other of the plurality of sub-systems being directed to the interaction manager.

The present invention will now be described by way of example, with reference to the accompanying drawings, in which:-
Figure 1 is a diagrammatic representation of an IN architecture;
Figure 2 is a diagrammatic representation of a CSTA architecture;
Figure 3 is a diagrammatic representation of a switching system including hardware and software sub-systems;
Figure 4 is a diagram illustrating interactions between existing features and an additional new feature;
Figure 5 illustrates how the relationships may be monitored when an additional feature is added to a system and live and duplicate software sub-systems are used;
Figure 6 illustrates the use of an interaction manager in relation to the duplicate software sub-system; and
Figure 7 illustrates a system topology according to the present invention.

A solution to the problem of integrating real time call processing legacy systems is presented here, but this is preceded by a little background information on the structure of a PABX, or for that matter any other real-time event driven software system. This background material is essential in considering the proposal that is put forward.

PABXs consist of hardware, which is basically a processor, a call switching sub-system and various option cards, and the software, which drives the hardware and provides the functionality that largely differentiates one switching product from another. It is by the development and extension of this software that a product is enhanced and maintains market differentiation against its competitors.

The functionality of the embedded software can be further subdivided into two classes; That which supports the basic call and that which implements value added features which operate on top of the base. It is these value added features which provide the added functionality.

As a result of market forces, most modern Private Automatic Branch Exchanges (PABXs) offer a large number of value added features and thus contain a large amount of code which implements them. In most cases this additional software is tightly integrated with the base software and cannot viably be separated out from it. In addition, the interactions between features within this code have been resolved by rules hard coded into the system such that the implementation of an individual feature is influenced by the other features that are also present. Indeed, it would be difficult to remove one feature from the system due to the subtle interactions between it and others.

Consider a hypothetical generic switching system, such as is shown for example in Figure 3, consisting of hardware and software sub-systems as discussed previously. These sub-systems communicate via modules of software which may be referred to as device drivers;

Events are passed from the hardware to the software, and commands are returned back from the software to control the actions of the hardware. Analysis at this level gives a definite demarcation and point of separation between hardware events (i.e. things which happen in the real physical world) and software events (i.e. events which are modelled within the world space of the software environment). It is in conjunction with this hypothetical system that the proposed technique will be discussed.

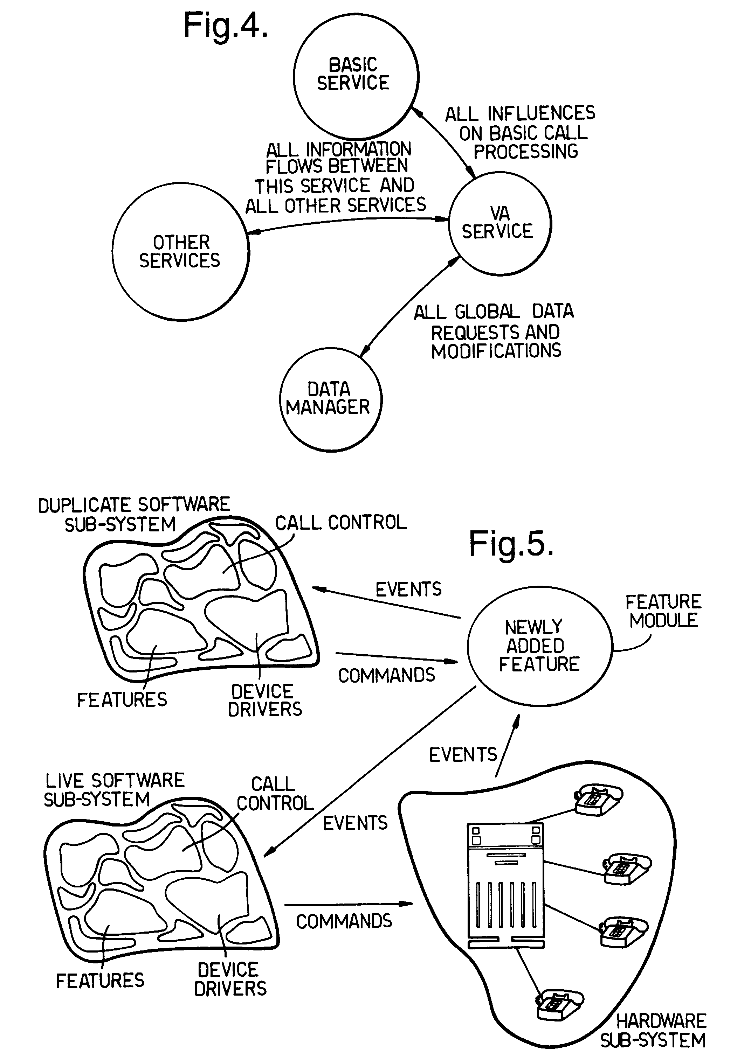

When a feature is specified, its interactions with existing features can be specified, such that a partial view of all of the other features with which it interacts is generated within the specification for the new feature as shown in Figure 4.

The messages from the existing feature to the new feature may be viewed as the actions that the other services would take if they were permitted to continue as if the new feature were not present. The messages from the new feature to the other services may be viewed as requests to modify the behaviour of the existing services in the light of the requirements of the new feature.

The above represents a specification time approach that has been adopted by European Telecommunications Standards Institute (ETSI) for the specification of new service packages³.

As has been discussed in the foregoing sections, in the future an increasing amount of Feature code will be placed outside the core switch which will still have to interwork with the embedded services that the switch already provides. If a restriction is placed on the modification of the existing embedded software and if it is required that additional Features can be provided outside the embedded switch software then it becomes a practical suggestion to see if the ETSI approach can be carried through into a runtime implementation to be incorporated into existing products.

This is very difficult to achieve for at least two reasons:
- The existing feature code is tightly bound to the low level device drivers, which means that all of the outside world hardware events are passed directly to the existing features. This delivery mechanism would need to be modified in order to incorporate new features.
- Features only respond to events from the outside world (i.e. they do not operate asynchronously). In this case it is very difficult to see how such a system could be implemented - after all, it is not possible to see what effect features would have in response to an event until they have completed their actions.

The first of these two objections can be overcome by providing a generic event delivery system which takes the events from the hardware and determines where they should be passed to via some defined triggering system.

The second objection can be overcome by providing multiple copies of the software, only one of which operates as the master copy which is permitted control of the physical hardware. This may be termed the 'Live' Software Sub-system. In the simplest implementation, with only one duplicate system, a second copy of the software behaves as if it has control of the hardware but in fact passes its commands back to the newly added feature. These two concepts are shown in Figure 5 for a scenario where one additional Feature in the form of a Feature Module has been introduced into the system.

In this case events are passed to the new feature which then has the option of what action to perform. Thus, the new feature can override any actions that the switch may wish to perform and the Feature Module is itself responsible for determining what events it is interested in. In the usual case the Feature Module would pass the event directly to the Live Software Sub-system for processing, since the event would be of no interest to it. However, when an event arrives in which the Feature Module is potentially interested, this is passed to the Duplicate Software Sub-system as shown in Figure 5 (which has been kept in synchronism with the Live Software Sub-system). This will then perform exactly the same processing as would the real software and will return its results as if driving the hardware, to the Feature Module. Based on the event and the results of the processing which the Duplicate System Software carried out, the Feature Module can then determine what events to send to the Live Software Sub-system to be actioned to the switch hardware.

One obvious development is to move much of the event control and priority determination software out of the Feature Module and into another module, which would then be a generic Interaction Manager.

The Feature Interaction module is then responsible for the arbitration between a number of external features and the embedded features which were already present within the switching system, which is simply viewed as being one more feature, or collection of features. The principle of the external Feature Manager module is described in Cain⁴.

There are a number of methods by which the Interaction Manager is triggered, and by which contests for the same event are resolved. A table based approach may be suitable in the short term but will be extremely restrictive in the future. Since a significant amount of triggering code is already provided within the embedded software, it may be more appropriate to pass all events to the Duplicate Software Sub-system and allow it to generate an exception if an external feature should be triggered. This would be appropriate for example in the case of CSTA when the CSTA functionality is already provisioned within the Embedded Software.

Additional copies of the software can be implemented quite easily by using a cache system which is switched in when a copy is required. The same processor, reading from the same physical memory, can then be used which removes the problem of synchronisation between duplicate copies of the software. When in duplicate mode (i.e. when the write cache is turned on) all writes to memory will in fact be to the cache and will have no permanent effect, since the cache can be flushed rather than being allowed to write back to the permanent memory. If however the Interaction Manager determines that the event should be allowed to progress as normal then no additional processing is required as the cache can simply be released and allowed to write back.

If the software is implemented in UNIX, then a possible procedure for producing the duplicate software can be implemented as below by using the UNIX fork call.^{[11]} The algorithm adopted is shown in pseudo-code form below.

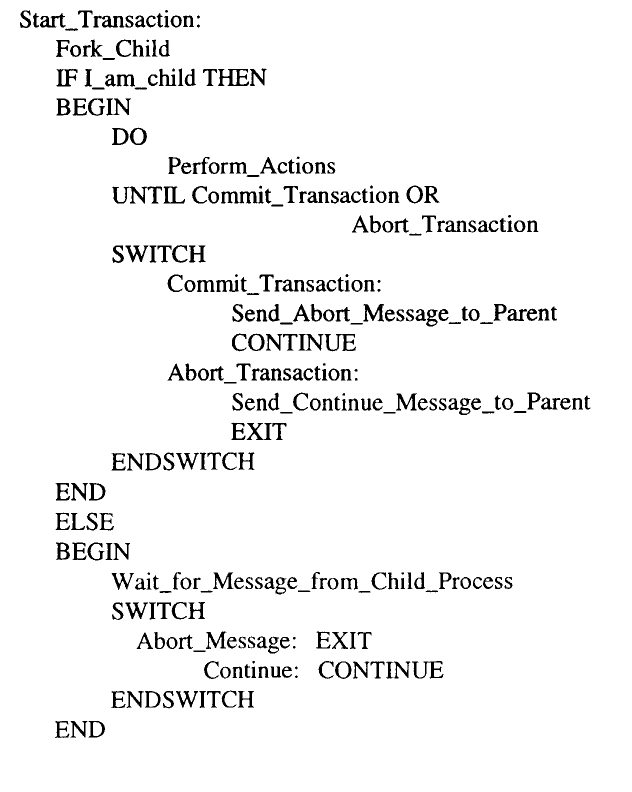

When a start transaction message is received the feature makes a copy of itself using the fork call. The parent process then waits. The child process takes and processes each of the events from the Core Switch until it receives either a commit or abort transaction message. If it receives a commit message it sends a message to the parent process telling it to die. The child process then becomes the parent.

If the message is an abort the child dies and the parent continues, having never seen any of the intervening messages.

In the case of a commit (the normal case) the only additional processing that has been required is the initial fork and the signal to the parent. In the case of a modern operating system with a copy-on-write fork strategy this is a minimal overhead. The overhead for an abort is obviously this time plus the processing time that the child process incurred.

The performance hit which could reasonably be expected from this adoption of this technique is thus minimal, since most of the time there will be no additional processing requirement. The trigger processing would have been performed anyway for CSTA processing and the atomic operation is provided by hardware which has no, or at worst minimal, performance implications.

The Interaction Manager would be implemented as a separate software system which would need to have high speed connections to all of the Feature Modules which could potentially be involved in a single call, since otherwise the overall performance of the switching system will suffer.

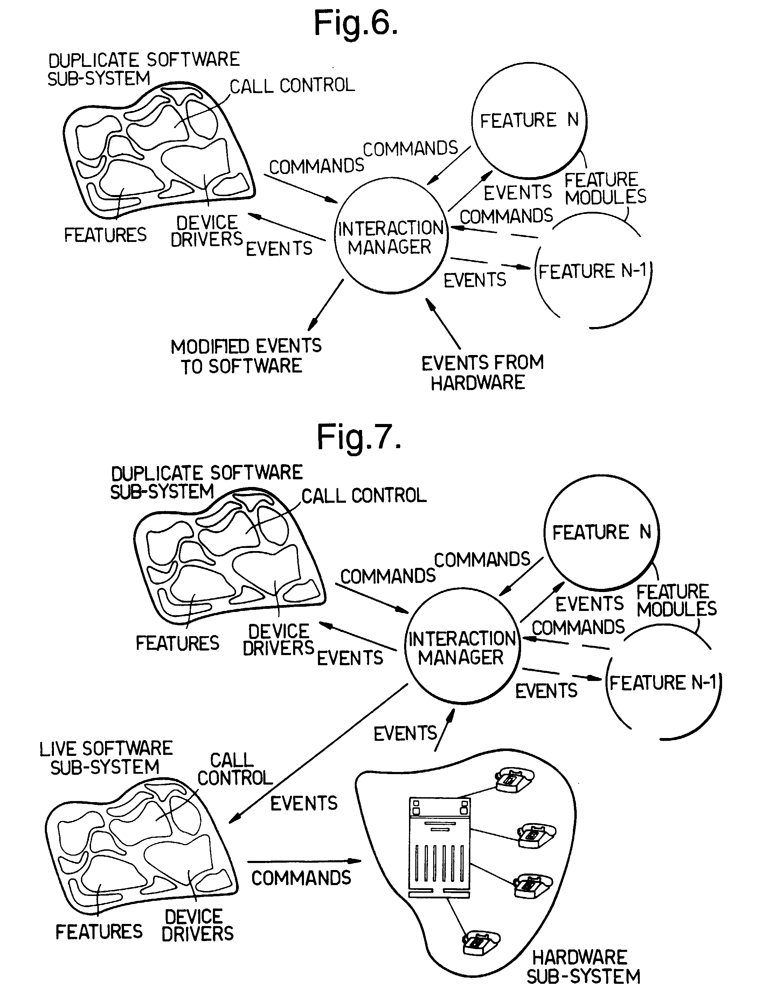

The invention is the development of a technique for allowing new functionality to be added to existing realtime systems by means of duplicating the software which normally runs within those realtime systems and using software copies to predict the actions of the embedded software if it were allowed to perform its default actions. An external agent, known as an Interaction Manager, is then responsible for resolving the contending requirements of the embedded software and any external functionality requests. Thus, in the general case for multiple features residing outside the switching system, the system topology could be as in Figure 7.

The usual problems of having to modify the existing legacy software in order to provide functionality upgrades are avoided by the use of this technique.

A technique has been presented which will allow for the ongoing development of feature software which can reside outside of the main switching core while still using the features that this offers.

This approach offers an upgrade path which also allows more and more functionality to be moved out of the core switch to external processing agents as time progresses. The approach does not preclude the use of any of the advanced Interaction Resolution Techniques which are now at the research stage including Negotiation and Resource Contention Techniques. Indeed, the adoption of this approach moves a switching product considerably closer to enabling an implementation using any of these technologies.

### GLOSSARY

### AUTOMATIC CALL DISTRIBUTION

This is a widely used system for distributing calls around a large number of recipients, or agents. Typical ACD applications would be flight booking or enquiry services, where each individual incoming call is routed to the agent who has been free for the longest period of time. In this way, each agent receives an approximately equivalent amount of time on calls.

### BASIC CALL

A simple, direct dialled, party to party call with no additional services in use. This type of call is handled totally within the Service Switching Point and does not refer to the Service Control Point at all during its lifetime.

### CALL CENTRE

This is a type of application which is superficially like ACD working, and would be used in similar situations; Booking Desks, Credit Enquiries etc. The difference between CC and ACD is that a computer system is integrated into the caller handling cycle so that the data entry/customer information screens of the application move with the caller.

By making this important change in the operation of the call processing operation it is possible to avoid the irritation that the caller suffers when having to repeat the same information to a number of agents during the processing of a single call.

### CALL WAITING

A service whereby the calling party is presented with ring tone and the called party, who is already busy on another call, receives a short burst of tone, indicating that there is another call to be answered. The called party than has the option to continue the current call or to answer the one which is ringing.

### CAMP-ON

Another name for Ring Backs (see later)

### CSTA

Computer Supported Telecommunications Applications. A set of protocols in the PABX environment which allow an external processing element, usually a minicomputer, to obtain information about the progress of calls within the switching system and optionally to modify them.

### IN

Intelligent Network. An architecture which allows the separation of Services from the Basic Call so that services can be developed independently.

### PABX

Private Automatic Branch Exchange. A private switch, which can be connected to other private switches to form a Private Network (PN).

### RING BACKS

Ring Backs are services where the party which sets them is called back when the party that they were trying to call becomes available. A Ring Back When Free is set when the terminating party is busy and the originating party will be rung back when the terminating party goes on hook. A Ring Back When Next Used is set when the terminating party does not answer and in this case the originating party will be rung back when the terminating party completes their next call.

### SERVICE CONTROL POINT (SCP)

Within the IN architecture, the point at which the service scripts are run. These service scripts then influence the call which is in progress as the Service Switching Point (SSP).

### SERVICE SWITCHING POINT (SSP)

Within the IN architecture, the point at which the call is switched. The SSP is totally responsible for the control of the basic call and sends requests to the SCP for additional instructions to support services.

### THREE PARTY CALL

A whole group of service features which allow three parties to be simultaneously active on a single call. The most common one of the Three Party Call Service Features is Call Conference.

### REFERENCES

1. CCITT (International Consultative Committee for Telecommunications and Telegraphy), Q.1200 Series Recommendations (now known as ITU (International Telecommunications Union)).
2. CSTA Specifications, ETSI (European Telecommunications Standards Institute).
3. M. Crowther, J. Ellsberger, J. Kroon, L. Verhaard, Service Interaction in Digital Telephone, A report on ongoing work at ETSI, France, Sophia Antipolis, ETSI ATM Project Team 37, November 27, 1992.
4. M. Cain, D. Gillespie, Automatic Generation of Efficient Run-Time Feature Management Data Structures from Hugh Levei Feature Relationships, US, International Workshop on Feature Interactions in Telecommunications Software Systems. December 3-4, 1992.
5. W.R. Stevens, Advanced Programming in the UNIX Environment, Addison Wesley Professional Computing Series, 1992, ISBN 0-201-56317-7.

## Claims

1. A software controlled system comprising an event generator, a plurality of software sub-systems, each sub-system containing the same plurality of features, an interaction manager and an external feature module, wherein all events are routed from the event generator to a sub-system via the interaction manager, only a one of the plurality of sub-systems being able to provide a response directly to the event generator, a response from any other of the plurality of sub-systems being directed to the interaction manager.

2. A system as claimed in Claim 1, wherein the interaction manager is able to create, destroy or modify events for passing to the plurality of sub-systems.

3. A system as claimed in Claim 1 or 2, comprising at least one further external feature module, and wherein the interaction manager provides arbitration between the external feature modules and between the external feature modules and the software sub-systems.

4. A telecommunications system as claimed in Claim 1, 2 or 3, wherein Computer Supported Telecommunications Application Technology is employed.

5. A telecommunications system as claimed in Claim 1, 2 or 3, wherein Intelligent Network Technology is employed.

6. A telecommunications system as claimed in any preceding claim, wherein a duplicate copy of the software is implemented by use of a cache system.

7. A system as claimed in Claim 1, 2, 3, 4 or 5 wherein the duplicate copy of the software is implemented.
